# EUROPÄISCHE PATENTANMELDUNG

(11) **EP 2 423 050 A1**
(43) Veröffentlichungstag der Anmeldung: **29.02.2012**
(21) Anmeldenummer: 10174192.4
(22) Anmeldetag: 26.08.2010
(51) Int. Cl.: B60R 13/08, B62D 29/00, F16B 5/06

(54) **Befestigungselement und Verfahren zur Befestigung eines Elementes an oder in einem Bauteil mittels eines Befestigungselementes**

(71) Anmelder: Sika Technology AG, 6340 Baar (CH)
(72) Erfinder: Brichet, Nicolas, 8047 Zürich (CH); Koller, Michael, 5312 Döttingen (CH)
(74) Vertreter: Isler, Jörg

(57) **Zusammenfassung**

Bei einem Befestigungselement (11) zur Befestigung eines Elementes (20) an oder in einem Bauteil (3), ist das Befestigungselement (11) am Element (20) angeordnet ist und greift in eine Öffnung (4) des Bauteiles (3) ein.
Das Befestigungselement (11) umfasst einen ersten Arm (5) und ein Rastelement (9), der erste Arm (5) und das Rastelement (9) sind jeweils an verschiedenen Orten am Element (20) angeordnet. Der erste Arm (5) umfasst einen inneren Schenkel (6), mittels dessen er am Element (20) angeordnet ist, anschliessend einen äusseren Schenkel (7) und anschliessend ein Haltelement (8). Das Halteelemente (8) ist mittels des äusseren Schenkels (7) in der Öffnung (4) angeordnet, und über den inneren Schenkel ist eine Rastkraft auf den äusseren Schenkel aufbringbar.
Vorzugsweise weist das Befestigungselement (11) zwei Arme (5, 15) auf.

## Beschreibung

### Technisches Gebiet

Die Erfindung geht aus von einem Befestigungselement nach dem Oberbegriff des ersten Anspruches.
Die Erfindung geht ebenfalls aus von einem Verfahren zur Befestigung eines Elementes an oder in einem Bauteil mittels eines Befestigungselementes nach dem Oberbegriff des unabhängigen Verfahrensanspruches.

### Stand der Technik

Befestigungselemente, auch Befestigungsclips genannt, werden benützt um verschiedene Element miteinander mechanisch zu verbinden. Dazu gibt es eine Vielzahl von verschiedenen Ausführungen. Der Befestigungsclip ist dabei üblicherweise an einem Trägerelement befestigt und greift in eine Öffnung eines Bauelementes ein, und wird mit diesem dann mechanisch verriegelt.

Vielfach weisen Bauelemente, wie Karosserien und/oder Rahmen von Transport- und Fortbewegungsmitteln, insbesondere von Fahrzeugen zu Wasser oder zu Land oder von Luftfahrzeugen, Hohlräume auf, insbesondere um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das leichte Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmäßige Form oder ein enges Ausmaß auf, wodurch es erschwert wird, sie richtig abzudichten, zu verstärken und zu dämpfen. Insbesondere im Automobilbau werden deshalb Abdichtungselemente (Englisch: Baffle) verwendet, um Hohlräume abzudichten und/ oder akustisch abzuschotten, oder Verstärkungselemente (Englisch: Reinforcer) verwendet, um Hohlräume zu verstärken.
Vielfach gibt es auch Probleme diese Elemente in den Hohlräumen genau und anhaltend zu positionieren. Deshalb werden sie mittels mindestens einem Befestigungsclip im Bauelement befestigt. Die derzeit verfügbaren Befestigungselemente weisen jedoch Nachteile auf, indem sie beispielsweise schwierig und nur mit einem grossen Kraftaufwand zu befestigen sind.

### Darstellung der Erfindung

Der Erfindung liegt die Aufgabe zugrunde, bei einem Befestigungselement der eingangs genannten Art die Nachteile des Standes der Technik zu vermeiden und ein verbessertes Befestigungselement zur Verfügung zu stellen.

Erfindungsgemäss wird dies durch die Merkmale des ersten Anspruches erreicht.

Kern der Erfindung ist es also, dass das Befestigungselement einen ersten Arm und ein Rastelement umfasst, dass der erste Arm und das Rastelement jeweils an verschiedenen Orten am Element angeordnet sind, dass der erste Arm einen inneren Schenkel, mittels dessen er am Element angeordnet ist, anschliessend einen äusseren Schenkel und anschliessend ein Haltelement umfasst, dass das Halteelemente mittels des äusseren Schenkels in der Öffnung angeordnet ist, und dass über den inneren Schenkel eine Rastkraft auf den äusseren Schenkel aufbringbar ist.

Die Vorteile der Erfindung sind unter anderem darin zu sehen, dass durch das erfindungsgemässe Befestigungselement eine leichte und doch sichere Befestigung ohne grossen Kraftaufwand ermöglicht wird.

Weitere vorteilhafte Ausgestaltungen der Erfindung ergeben sich aus den Unteransprüchen.

### Kurze Beschreibung der Zeichnung

Im Folgenden werden anhand der Zeichnungen Ausführungsbeispiele der Erfindung näher erläutert. Gleiche oder gleichwirkende Elemente sind in den verschiedenen Figuren mit den gleichen Bezugszeichen versehen. Bewegungsrichtungen sind mit Pfeilen angegeben.

Es zeigen:
- Fig. 1: schematische Draufsicht auf ein erfindungsgemässes Befestigungselementes welches zum Befestigen eines Trägerteiles in einem Bauteil dient;
- Fig. 2: schematische Draufsicht auf das erfindungsgemässe Befestigungselement aus Fig. 1;
- Fig. 3: schematische Draufsicht auf das erfindungsgemässe Befestigungselement aus Fig. 1 von hinten;
- Fig. 4: schematische Draufsicht auf ein weiteres erfindungsgemässes Befestigungselement.

Es sind nur die für das unmittelbare Verständnis der Erfindung wesentlichen Elemente gezeigt.

### Weg zur Ausführung der Erfindung

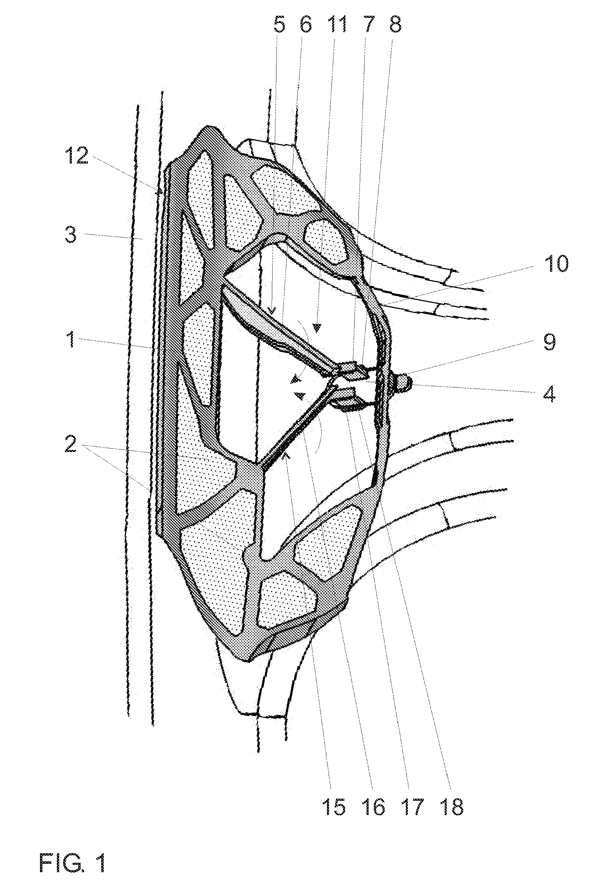

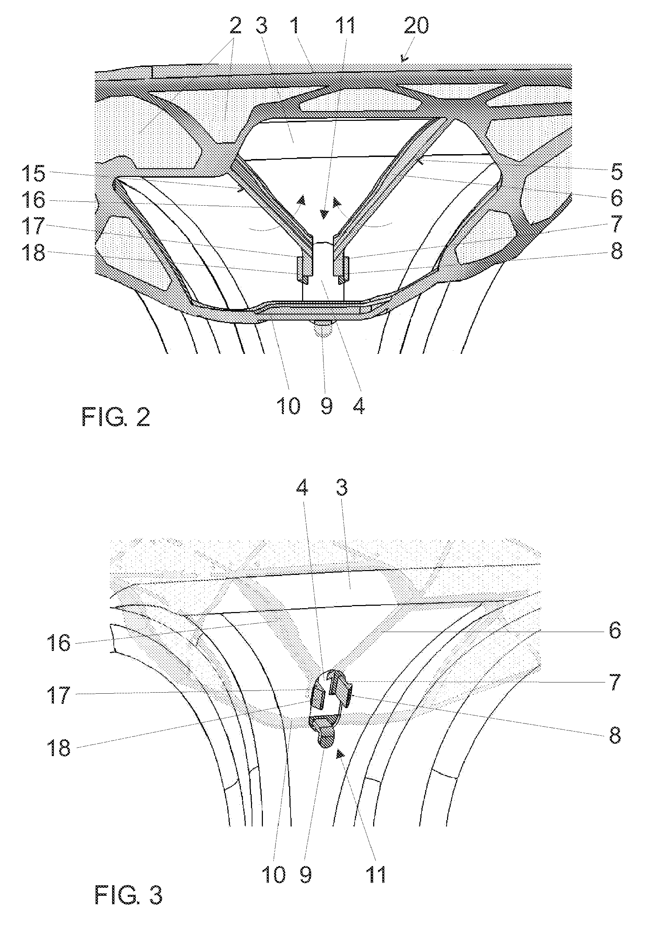

In den Fig. 1, 2 und 3 ist ein Element 20 dargestellt, wobei ein solches Element beliebig ausgestaltet werden kann. Als besonders bevorzugt sind hier Elemente 20 dargestellt, welche als Abdichtungselement oder Verstärkungselement verwendet werden können. Das Element 20 umfasst dann ein Trägerelement 1, ein schäumbares Element 2 und ein erfindungsgemässes Befestigungselement 11. Das Trägerelement 1 kann aus verschiedensten Materialien bestehen, diese werden weiter unten im Detail beschrieben. Vorzugsweise besteht es aus einem faserverstärkten Polymer. Zudem ist weiter unten die Herstellung des hier gezeigten Elementes 20 im Detail beschrieben. Das schäumbare Teil kann dabei das Trägerteil ganz oder nur teilweise bedecken. Das schäumbare Element 2 besteht aus einem schäumbaren Material, solche schäumbaren Materialien werden weiter unten im Detail beschrieben.

Dieses Element 20 ist an einem Bauteil 3, insbesondere an oder in Karosserien und/oder Rahmen von Transport- und Fortbewegungsmitteln, insbesondere von Fahrzeugen zu Wasser oder zu Land oder von Luftfahrzeugen, angeordnet, besonders vorteilhaft zur Stützung eines Panels oder Bleches der Karosserie des Fahrzeuges, insbesondere des Kotflügels oder der Stossstange des Fahrzeuges. Insbesondere ist es in einem Hohlraum des Bauteiles 3 angeordnet. Es versteht sich von selbst, dass ein solches Element 20 in jeglichem Hohlraum angeordnet werden kann.

Das Element 20 umfasst weiterhin mindestens ein Befestigungselement 11 zur Befestigung und Positionierung des Elements an dem Bauteil 3. Das Befestigungselement umfasst mindestens einen ersten Arm 5 und ein Rastelement 9. Bevorzugt umfasst das Befestigungselement 11 mindestens einen zweiten Arm 15, somit mindestens zwei Arme 5 und 15. Die beiden Arme 5, 15 umfassen je einen inneren Schenkel 6, 16, einen äusseren Schenkel 7, 17 und ein Halteelement 8, 18. Die beiden Arme sind dabei so ausgestaltet, dass sie gegeneinander durch aufbringen einer Kraft bewegbar sind. Die äusseren Schenkel sind gegenüber den inneren Schenkel abgewinkelt, bevorzugt in einem Winkel von 20 bis 160°, besonders bevorzugt in einem Winkel von 60 bis 120°, insbesondere in einem Winkel von 80 bis 100°. Diese Winkel werden zu einer Ebene gemessen, die durch die Biegeebene des jeweiligen inneren Schenkel 6, 16 definiert ist. Die Biegeebene entsteht durch das Biegen der inneren Schenkel 6,16, um das jeweilige Halteelemente 8, 18 in die Öffnung 4 des Bauteiles einführen zu können, wie dies auch weiter unten beschrieben ist.

Die inneren Schenkel 6, 16 sind im Vergleich zu den äusseren Schenkeln relativ lang ausgeführt, bevorzugt mindestens doppelt so lange, insbesondere mindestens drei mal so lange wie die äussern Schenkel, so dass sie mit relativ geringem Kraftaufwand biegbar sind. Die inneren Schenkel können an sich beliebig ausgeführt sein, solange sie biegbar sind. Die inneren Schenkel können somit gerade, gebogen, gekrümmt, angewinkelt, aus mehreren zueinander abgewinkelten Segmenten, usw. ausgeführt sein.
Die äusseren Schenkel 7, 17 sind im Vergleich mit den inneren Schenkeln relativ kurz ausgeführt. Die äusseren Schenkel dienen im wesentlichen dazu das an ihnen angeordnete Rastelement in die Öffnung 4 des Bauteils eingreifen zu lassen.

Um das Element 20 im Bauteil 3 zu befestigen, greift zuerst das Rastelement 9, welches an einem Träger 10 befestigt sein kann, in die Öffnung 4 des Bauteiles ein. Dazu ist das Rastelement 9 vorzugsweise gerade, bogenförmig, hakenförmig, insbesondere L-förmig oder U-förmig ausgestaltet, so dass es in die Öffnung 4 eingreifen kann. Danach wird der innere Schenkel 6, oder bei zwei Armen die inneren Schenkel 6 und 16 der beiden Arme durch Krafteinwirkung von aussen durch elastische Verformung gebogen und bei zwei Schenkeln gegeneinander bewegt, beispielsweise indem man sie mit der Hand oder mittels eines Roboters gegeneinanderdrückt. Dies bedeutet, dass die inneren Schenkel durchgebogen werden und sich zueinander hinbewegen, da die inneren Schenkel fest am Trägerteil angeordnet sind. Entsprechend werden die äusseren Schenkel 7, 17 näher zusammengeführt, so dass sich die Halteelemente 8, 18 in die Öffnung 4 des Bauteiles einführen lassen. Danach werden die inneren Schenkel losgelassen, wodurch sich diese durch die elastische Rückstellkraft in die vorherige Position zurückzubewegen versuchen und die Halteelemente 8, 18 in der Öffnung 4 des Bauteiles einrasten. Die elastische Rückstellkraft der inneren Schenkel kann durch die Geometrie, das heisst die Länge und der Querschnitt der Schenkel sowie durch das Material der Schenkel eingestellt werden.
Eine elastische Verformung der äusseren Schenkel oder der Halteelemente 8, 18 ist dabei nicht notwendig.

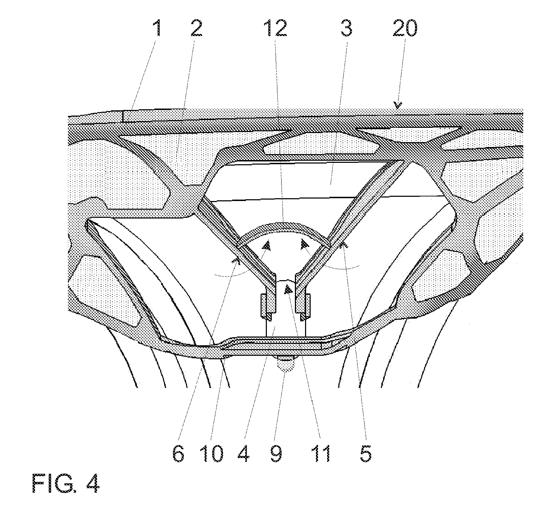

In Fig. 4 ist eine weitere Ausführungsform der Erfindung dargestellt. Bei dieser Ausführung sind die inneren Schenkel 6, 16 mittels eines Federelementes 12 miteinander verbunden. Durch dieses Federelement kann die Rückstellkraft der inneren Schenkel vergrössert werden. Auch hier kann durch die Anordnung, Geometrie und Materialeigenschaften die Rückstellkraft eingestellt werden. In Fig. 4 ist das Federelement als Verbindung der zwei inneren Schenkel aus dem gleichen Material wie die Schenkel ausgeformt.

Grundsätzlich wird die Rückstellkraft, auch Rastkraft genannt, so eingestellt, dass beim Einrasten der Halteelemente in die Öffnung dies ohne grossen Kraftaufwand bewerkstelligt werden kann, aber auch so, dass nach dem Einrasten das Element sicher am oder im Bauteil befestigt ist.

Dadurch wird das Element 20 am Bauteil 3 festgeklemmt und kann sich nicht mehr verschieben. Dadurch bleibt das Element 20 in seiner Position, auch bei weiteren Bearbeitungsschritten wie beispielsweise beim
Tauchlackierungsprozess und beim anschliessenden Einbrennprozess. Durch den Einbrennprozess wird das schäumbare Element 2 geschäumt und dehnt sich entsprechend den zugegebenen Schäumungsmitteln aus. Die mechanischen Eigenschaften sind durch die Zusammensetzung und den Schäumungsgrad des schäumbaren Materials vorgegeben und werden weiter unten im Detail beschrieben. Diese Eigenschaften werden entsprechend dem Verwendungszweck eingestellt, z.B. ob in diesem Bereich der Hohlraum verstärkt oder nur abgedichtet werden soll. Das Trägerteil 1 kann dazu verwendet werden, um das Element 20 stabiler auszugestalten und auch die Richtung der Expansion beim Schäumen zu beeinflussen.

Besonders vorteilhaft ist es, wenn die vorgängig beschrieben erfinderischen Ausführungsformen dazu benützt werden, ein Panel oder Blech der Karosserie des Fahrzeuges zu stützen, insbesondere des Kotflügels der Karosserie des Fahrzeuges.

### Schäumbare Materialien:

Als schäumbares Material 2 kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.
Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandiisocyanat (MDI), 2,4-und 2,6-Toluylendiisocyanat (TDI) oder 1-Isocyanato-3,3,5-trimethyl-5-isocyanatomethyl-cyclohexan (IPDI).
Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und
US 5,373,027 beschrieben, deren Offenbarung hiermit eingeschlossen ist. Solche schäumbaren Materialien sind für die vorliegende Erfindung besonders bevorzugt.

Als schäumbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

### Trägermaterial

Das Trägerteil 1 sowie das Befestigungselement 11 kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann das Trägerteil 1 einen beliebigen Aufbau und eine beliebige Struktur aufweisen. Es kann beispielsweise massiv, hohl, oder geschäumt sein oder eine gitterartige Struktur aufweisen. Die Oberfläche des Trägerteils kann typischerweise glatt, rau oder strukturiert sein.
Das Trägerteil 1 kann zusätzlich zur seiner Funktion als Träger für das schäumbare Material zur strukturellen Verstärkung oder zur Abdichtung des Bauteils oder auch zur Geräuschdämmung beitragen.

Bei erfindungsgemässen Abdichtungs- und Verstärkungselementen, bei welchen sich das schäumbare Material auf einem Trägerteil befindet, unterscheidet sich das Herstellungsverfahren dementsprechend, ob das Trägerteil aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerteil, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das schäumbare Material, wird mit einem zweiten Spritzaggregat an die erste Komponente angespritzt. Besteht das Trägerteil aus einem Material, welches sich nicht durch das Spritzgussverfahren herstellen lässt, also beispielsweise aus einem Metall, wird das Trägerteil in ein entsprechendes Werkzeug gelegt und das schäumbare Material wird an das Trägerteil angespritzt.
Selbstverständlich besteht auch die Möglichkeit das schäumbare Material durch beliebige andere Befestigungselement oder -verfahren an ein Trägerteil zu befestigen.

### Bezugszeichenliste

- 1: Trägerelement, -teil
- 2: Schäumbare(s) Element(e) / Teil
- 3: Bauteil
- 4: Öffnung Bauteil
- 5: Erster Arm
- 6: Innerer Schenkel von 5
- 7: Äusserer Schenkel von 5
- 8: Halteelement von 5
- 9: Rastelement
- 10: Träger Rastelement
- 11: Befestigungselement
- 12: Federelement
- 15: Zweiter Arm
- 16: Innerer Schenkel von 15
- 17: Äusserer Schenkel von 15
- 18: Halteelement von 15
- 20: Element

## Patentansprüche

1. Befestigungselement (11) zur Befestigung eines Elementes (20) an oder in einem Bauteil (3), wobei das Befestigungselement (11) am Element (20) angeordnet ist und in eine Öffnung (4) des Bauteiles (3) eingreift, **dadurch gekennzeichnet,**
**dass** das Befestigungselement (11) einen ersten Arm (5) und ein Rastelement (9) umfasst, dass der erste Arm (5) und das Rastelement (9) jeweils an verschiedenen Orten am Element (20) angeordnet sind, dass der erste Arm (5) einen inneren Schenkel (6), mittels dessen er am Element (20) angeordnet ist, anschliessend einen äusseren Schenkel (7) und anschliessend ein Haltelement (8) umfasst, dass das Halteelemente (8) mittels des äusseren Schenkels (7) in der Öffnung (4) angeordnet ist, und dass über den inneren Schenkel eine Rastkraft auf den äusseren Schenkel aufbringbar ist.

2. Befestigungselement nach Anspruch 1,
**dadurch gekennzeichnet,**
**dass** das Befestigungselement (11) einen zweiten Arm (15) umfasst, dass der erste Arm (5), zweite Arm (15) und das Rastelement (9) jeweils an verschiedenen Orten am Element (20) angeordnet sind, dass der erste und zweite Arm (5, 15) jeweils einen inneren Schenkel (6, 16), mittels dessen sie am Element (20) angeordnet sind, anschliessend einen äusseren Schenkel (7, 17) und anschliessend ein Haltelement (8, 18) umfassen, dass die Halteelemente (8, 18) mittels der äusseren Schenkel (7, 17) in der Öffnung (4) angeordnet sind, und dass über die inneren Schenkel eine Rastkraft auf die äusseren Schenkel aufbringbar ist.

3. Befestigungselement nach Anspruch 1 oder 2,
**dadurch gekennzeichnet,**
**dass** die inneren Schenkel (6, 16) länger sind als die äusseren Schenkel (7, 17), bevorzugt mindestens doppelt so lange, insbesondere mindestens drei mal so lange wie die äussern Schenkel.

4. Befestigungselement nach Anspruch 1, 2 oder 3,
**dadurch gekennzeichnet,**
**dass** die äusseren Schenkel (7, 17) gegenüber den inneren Schenkeln (6, 16) in einem Winkel abgewinkelt sind, bevorzugt in einem Winkel von 20 bis 160°, besonders bevorzugt in einem Winkel von 60 bis 120°, insbesondere in einem Winkel von 80 bis 100°, wobei dieser Winkel zu einer Ebene gemessen wird, die durch die Biegeebene des jeweiligen inneren Schenkels (6, 16) definiert ist.

5. Befestigungselement nach einem der vorhergehenden Ansprüche,
**dadurch gekennzeichnet,**
**dass** das Element (20) ein Trägerelement (1) umfasst.

6. Befestigungselement nach Anspruch 5,
**dadurch gekennzeichnet,**
**dass** das Element (20) ein schäumbares Element (2) umfasst.

7. Befestigungselement nach einem der vorhergehenden Ansprüche,
**dadurch gekennzeichnet,**
**dass** das Rastelement (9) auf einem Träger (10) angeordnet ist.

8. Befestigungselement nach einem der vorhergehenden Ansprüche,
**dadurch gekennzeichnet,**
**dass** das Befestigungselement (11) ein Federelement (12) umfasst, welches die beiden inneren Schenkel (6, 16) miteinander verbindet.

9. Verwendung gemäss einem der Ansprüche 1 bis 8 zur Verstärkung in Hohlräumen von strukturellen Bauteilen in Karosserien und/oder Rahmen von Transport- und Fortbewegungsmitteln, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen.

10. Verwendung gemäss einem der Ansprüche 1 bis 8 zur Verstärkung von Panel oder Blech der Karosserie von Fahrzeugen, insbesondere des Kotflügels der Karosserie von Fahrzeugen.

11. Verfahren zur Befestigung eines Elementes (20) an oder in einem Bauteil mittels eines Befestigungselementes (11), wobei das Befestigungselement am Element (20) angeordnet ist und in eine Öffnung (4) des Bauteiles (3) eingreift,
**dadurch gekennzeichnet,**
**dass** das Befestigungselement (1) einen ersten Arm (5) und ein Rastelement (9) umfasst, dass der erste Arm (5) und das Rastelement (9) jeweils an verschiedenen Orten am Element (20) angeordnet sind, dass der erste Arm (5) einen inneren Schenkel (6), mittels dessen er am Element (20) angeordnet ist, anschliessend einen äusseren Schenkel (7) und anschliessend ein Haltelement (8) umfasst,
**dass** das Halteelemente (8) mittels des inneren Schenkels (6) so bewegt wird, dass das Halteelement mittels des äusseren Schenkels in die Öffnung (4) des Bauteiles (3) eingreift,
und **dass** über den inneren Schenkel eine Rastkraft auf den äusseren Schenkel aufgebracht wird.

12. Verfahren nach Anspruch 11,
**dadurch gekennzeichnet,**
**dass** das Befestigungselement (1) einen zweiten Arm (15) umfasst, dass der erste Arm (5), zweite Arm (15) und das Rastelement (9) jeweils an verschiedenen Orten am Element (20) angeordnet sind, dass der erste und zweite Arm (5, 15) jeweils einen inneren Schenkel (6, 16), mittels dessen sie am Element (20) angeordnet sind, anschliessend einen äusseren Schenkel (7, 17) und anschliessend ein Haltelement (8, 18) umfassen,
**dass** die Halteelemente (8, 18) mittels der inneren Schenkel (6, 16) so gegeneinander bewegt werden, dass die Halteelemente mittels der äusseren Schenkel in die Öffnung (4) des Bauteiles (3) eingreifen, und dass über die inneren Schenkel eine Rastkraft auf die äusseren Schenkel aufgebracht wird.

13. Verfahren nach Anspruch 11 oder 12,
**dadurch gekennzeichnet,**
**dass** zuerst das Rastelement (9) in die Öffnung (4) eingreift.
